# EUROPÄISCHE PATENTANMELDUNG

(11) **EP 4 401 058 A1**
(43) Veröffentlichungstag der Anmeldung: **17.07.2024**
(21) Anmeldenummer: 23151736.8
(22) Anmeldetag: 16.01.2023
(51) Int. Cl.: G08B 13/196

(54) **DROHNENABWEHRSYSTEM**

(71) Anmelder: Securiton GmbH, 77855 Achern (DE)
(72) Erfinder: GEISER, Jochen, 77855 Achern (DE)
(74) Vertreter: Grünecker Patent- und Rechtsanwälte PartG mbB

(57) **Zusammenfassung**

Die Erfindung betrifft ein Verfahren und ein System zur Drohnenabwehr. Das System umfasst mindestens einen Sensor, der konfiguriert ist, eine Drohne zu detektieren, einen Sender, der konfiguriert ist, um ein Signal zu einer Drohne zu schicken, eine oder mehrere Kameras, einen oder mehrere Prozessoren, und ein oder mehrere computerlesbare Speichermedien, auf denen computerausführbare Anweisungen gespeichert sind, die, wenn sie von dem einen oder den mehreren Prozessoren ausgeführt werden, bewirken, dass eine Position einer mittels des mindestens einen Sensors detektierten Drohne bestimmt wird, die eine oder die mehreren Kameras auf die bestimmte Position der Drohne ausgerichtet werden, Bilder der ein oder mehreren Kameras ausgewertet werden, um mindestens eines der Folgenden: eine Nutzlast der Drohne zu bestimmen, einen Typ der Drohne zu bestimmen, und die Position der Drohne zu verifizieren, und basierend auf der Auswertung der Bilder der ein oder mehreren Kameras mindestens eines der Folgenden: ein Alarm an mindestens einen Nutzer signalisiert wird, die bisherige Steuerung der Drohne mittels des Senders übernommen wird, und die bisherige Steuerung der Drohne mittels des Senders getrennt wird.

## Beschreibung

Die Erfindung bezieht sich allgemein auf das Gebiet von Überwachungssystemen und insbesondere auf ein System zur Drohnenabwehr.

Überwachungssysteme überwachen einen bestimmten Bereich gegen spezielle Gefahren. Ein Eindringen von Menschen in einen geschützten Bereich kann beispielsweise mit Hilfe von Überwachungskameras festgestellt werden. Allerdings können Gefahren durch autonome oder ferngesteuerte Geräte oft vielfältiger sein, sodass eine Überwachung mit Kameras keinen ausreichenden Schutz bietet. Gegen Bedrohungen aus der Luft sind Kameras nicht geeignet, da der zu überwachende Bereich nicht klar definiert ist.

Der Einsatz von Drohnen ist weit verbreitet. Die fernsteuerbaren Fluggeräte sind günstig zu beschaffen und leicht zu bedienen. Die stetig wachsende Zahl von gewerblich wie privat genutzten Drohnen birgt Risiken. Derzeit zählen Drohnen zu den meistverbreiteten technologischen Bedrohungen aus der Luft. Allerdings lässt sich die Gefahr, die von einer Drohne ausgeht, schlecht abschätzen, da mit herkömmlichen Luftüberwachungssystemen lediglich die Anwesenheit und die Position der Drohne bestimmt wird. Mit einem Radar lässt sich beispielsweise nicht der Drohnentyp oder die Nutzlast einer Drohne bestimmen.

Die Abwehr von detektierten Drohnen gestaltet sich oft als schwierig, da durch beispielsweise den Abschuss einer Drohne Dritte gefährdet werden können. Außerdem kann ohne Informationen über den Typ oder die Nutzlast einer Drohne eine falsche Entscheidung über die Art der Abwehr getroffen werden. Die Art der Abwehr lässt sich in passive und aktive Maßnahmen unterteilen. Aktive Maßnahmen lassen sich weiter in weiche oder harte Methoden unterteilen. Passive Maßnahmen beschränken sich zum Beispiel darauf, einen Alarm auszulösen. Aktive Maßnahmen umfassen einen Eingriff. Zu den weichen Maßnahmen gehört das sogenannte "Jammen", bei dem Störsignale die Funkverbindung zur Drohne abreißen lassen, um sie so zur Landung zu zwingen. Das funktioniert allerdings nur, wenn sie für solch einen Fall zur Landung programmiert ist. Die Gefahr besteht, dass sie unkontrolliert weiterfliegt und abstürzt. Beim "Spoofing" hingegen wird der Drohne ein falsches GPS-Signal vorgegaukelt, um sie so von ihrem Kurs abzubringen. Auch hier kann es abhängig von einer Nutzlast der Drohne jedoch zu einer Gefahr für Dritte kommen. Als harte Abwehr wird das physische Abfangen oder Abschießen der Drohne bezeichnet. Ein derartiger Eingriff kann unbeteiligte Personen gefährden.

Der Erfindung liegt die Aufgabe zugrunde, eine verbessertes und sicheres Verfahren und System zur Drohnenabwehr bereitzustellen.

Die vorliegende Erfindung löst die angesprochenen Probleme und die Aufgabe durch ein System zur Drohnenabwehr. Das System umfasst mindestens einen Sensor, der konfiguriert ist, eine Drohne zu detektieren, einen Sender, der konfiguriert ist, ein Signal zu einer Drohne zu schicken, eine oder mehrere Kameras, einen oder mehrere Prozessoren, und ein oder mehrere computerlesbare Speichermedien, auf denen computerausführbare Anweisungen gespeichert sind. Diese computerausführbaren Anweisungen bewirken, wenn sie von dem einen oder den mehreren Prozessoren ausgeführt werden, dass eine Position einer mittels des mindestens einen Sensors detektierten Drohne bestimmt wird, dass die eine oder die mehreren Kameras auf die bestimmte Position der Drohne ausgerichtet werden, dass Bilder der ein oder mehreren Kameras ausgewertet werden, um mindestens eines der Folgenden auszuführen: eine Nutzlast der Drohne zu bestimmen, einen Typ der Drohne zu bestimmen und die Position der Drohne zu verifizieren, und basierend auf der Auswertung der Bilder der ein oder mehreren Kameras mindestens eine der folgenden Aktionen auszulösen: dass ein Alarm an mindestens einen Nutzer signalisiert wird, die bisherige Steuerung der Drohne mittels des Senders übernommen wird, und die bisherige Steuerung der Drohne mittels des Senders getrennt wird.

Die Unteransprüche enthalten weitere vorteilhafte Ausführungsformen der Erfindung.

Das erfindungsgemäße System hat den Vorteil, dass die Sicherheit während der Abwehr einer Drohne erhöht werden kann. Durch die Kombination von einem Drohnendetektionssystem mit Kameraaufnahmen können präzise sicherheitsrelevante Informationen bezüglich einer Drohne bestimmt und effektiv Entscheidungen zur Drohnenabwehr getroffen werden. Der Alarm kann Informationen über die Auswertung der Bilder der ein oder mehreren Kameras enthalten.

In einer Ausführungsform umfasst der mindestens eine Sensor einen Empfänger, der ausgestaltet ist, um Daten, die zwischen der Drohne und einer zur Drohne zugehörigen Fernbedienung übermittelt werden, zu detektieren, wobei die Drohne basierend auf den zwischen der Drohne und der zur Drohne zugehörigen Fernbedienung übermittelten Daten detektiert wird. Zusätzlich oder alternativ kann ein Typ der Drohne basierend auf den zwischen der Drohne und der zur Drohne zugehörigen Fernbedienung übermittelten Daten bestimmt werden. Eine Position der zur Drohne zugehörigen Fernbedienung oder ein Startpunkt der Drohne kann basierend auf den Daten, die zwischen der Drohne und der zur Drohne zugehörigen Fernbedienung übermittelt werden, bestimmt werden. Alternativ kann eine Position der zur Drohne zugehörigen Fernbedienung oder ein Startpunkt der Drohne basierend auf aus der Drohne extrahierten Daten bestimmt werden.

In einer Ausführungsform wird die Position der Drohne mittels aus der Drohne extrahierter Daten bestimmt. Alternativ oder zusätzlich kann das System zur Drohnenabwehr ein Ortungssystem, wie beispielsweise ein Radar, umfassen, und die Position der Drohne mittels des Ortungssystems bestimmt werden. Die eine oder die mehreren Kameras können automatisch auf die bestimmte Position der Drohne ausgerichtet werden und diese mit den ein oder mehreren Kameras verfolgen oder tracken. Dies kann mittels eines Schwenken-bei-Erkennung (slew-to-cue)-Verfahrens und/oder mittels künstlicher Intelligenz (KI) erfolgen. Zusätzlich kann mittels KI die Drohne basierend auf den Bildern der ein oder mehreren Kameras detektiert und klassifiziert werden, wodurch ein videobasiertes Tracking der Drohne stattfinden kann. Verliert die KI das Objekt während des Trackings, nimmt das slew-to-cue-Verfahren die Aufgabe wieder auf. Die eine oder die mehreren Kameras können ein oder mehrere Pan, Tilt und Zoom, PTZ, -Kameras umfassen.

In einer Ausführungsform können die computerausführbaren Anweisungen, wenn sie von dem einen oder den mehreren Prozessoren ausgeführt werden, bewirken, dass mittels des Senders mindestens ein Signal an eine Kommunikationsschnittstelle der Drohne gesendet wird, wobei das Signal bewirkt, dass eine bisherige zur Drohne zugehörige Fernbedienung getrennt wird und Daten aus den Telemetrie-Daten der Drohne/Fernbedienung ausgelesen werden oder die Steuerung der Drohne übernommen wird. Nach Empfang von Drohnendaten werden die Drohnenkennungen extrahiert und diese als autorisiert oder nicht autorisiert klassifiziert. Das System dekodiert die Telemetrie-Daten oder das Telemetrie-Signal, und stellt die Drohnenposition mit GPS-Genauigkeit dar. Die Dekodierung beinhaltet die Startposition der Drohne, die Position der Fernbedienung und die Position wie den Kurs der Drohne.

In einer Ausführungsform können die computerausführbaren Anweisungen, wenn sie von dem einen oder den mehreren Prozessoren ausgeführt werden, bewirken, dass mittels des Senders mindestens ein Signal an eine Kommunikationsschnittstelle der Drohne gesendet wird, wobei das Signal bewirkt, dass eine bisherige zur Drohne zugehörige Fernbedienung getrennt wird und Daten aus einem Speicher der Drohne ausgelesen werden oder die Steuerung der Drohne übernommen wird. Die aus dem Speicher der Drohne ausgelesenen Daten können ein GPS-Signal der Drohne umfassen und die Position der Drohne kann basierend auf dem GPS-Signal bestimmt werden. Eine Position einer zur Drohne zugehörigen Fernbedienung oder eines Startpunkts der Drohne kann basierend auf den aus dem Speicher der Drohne ausgelesenen Daten bestimmt werden.

In einer Ausführungsform umfasst das System eine Einsatzdrohne, wobei die Einsatzdrohne ausgestaltet ist, die Position der Drohne, eine Position einer zu der Drohne zugehörigen Fernbedienung oder einen Startpunkt der Drohne als Zielort automatisch anzusteuern. Zusätzlich kann die Drohnen an weitere Positionen fliegen, welche durch weitere angeschlossene Subsysteme(Alarme) gemeldet werden, wie z.B. Zaunsensoren oder Videoanalysen. Die Einsatzdrohne umfasst mindestens eine Kamera, um am Zielort dokumentierende Bilder aufzunehmen. Die Einsatzdrohne kann ausgestaltet sein, um die Drohne, ein Fahrzeug oder eine Person basierend auf von der Einsatzdrohne aufgenommenen Bildern zu verfolgen. Die Bilder von der Einsatzdrohne können mittels Gesichtserkennung ausgewertet werden.

In einer Ausführungsform umfasst das System einen Sicherheitscontainer. Das System kann ausgestaltet sein, die Drohne nach Übernahme der Steuerung in dem Sicherheitscontainer zu landen. In dem Sicherheitscontainer kann die Drohne unschädlich gemacht werden. Der Sicherheitscontainer kann eine oder mehrere durchsichtige Scheiben umfassen, um eine Gefahr, die von der Drohne ausgeht, zu bestimmen.

Die vorliegende Erfindung löst die angesprochenen Probleme und die Aufgabe durch ein Verfahren zur Übernahme einer Drohne. Das Verfahren umfasst die Schritte des Bestimmens einer Position der Drohne, des Übernehmens einer bisherigen Steuerung der Drohne oder Trennen der bisherigen Steuerung der Drohne, des Ausrichtens einer oder mehrerer Kameras auf die bestimmte Position der Drohne, des Aufnehmens einer oder mehrerer Bilder mit der/den ausgerichteten einen oder mehreren Kameras, und des Anzeigens einer digitalen Darstellung einer Flugroute der Drohne, umfassend eine digitale Darstellung der bestimmten Position der Drohne, in Kombination mit ein oder mehreren Bildern der ein oder mehreren Kameras.

Durch die Anzeige einer digitalen Darstellung einer Flugroute der Drohne in Kombination mit ein oder mehreren Bildern der ein oder mehreren Kameras kann die Gefahr durch eine Drohne schnell und effektiv abgeschätzt oder bestimmt werden. Beispielsweise kann eine Nutzlast der Drohne bestimmt werden und eine Gefahr, die von der Nutzlast ausgeht. Alternativ kann ein Typ der Drohne bestimmt werden oder, ob es sich bei einer Drohne um eine Drohne aus einem Selbstbausatz handelt. Zusätzlich kann die Position der Drohne verifiziert werden. Durch ein schnelles Bestimmen der Gefahr durch eine Drohne können effektiv Gegenmaßnahmen ergriffen werden.

In einer Ausführungsform umfasst das Verfahren den Schritt des Empfangens von zwischen der Drohne und einer zur Drohne zugehörigen Fernbedienung übermittelten Daten durch einen Empfänger eines Systems zur Abwehr einer Drohne, des Identifizierens eines Typs der Drohne oder einer Steuerung der Drohne basierend auf zwischen der Drohne und der zur Drohne zugehörigen Fernbedienung übermittelten Daten. Das Übernehmen der bisherigen Steuerung der Drohne oder das Trennen der bisherigen Steuerung der Drohne kann das Senden eines Signals mittels eines Senders an eine Kommunikationsschnittstelle der Drohne umfassen. Das Signal kann von dem identifizierten Typ der Drohne oder der identifizierten Steuerung der Drohne abhängen. Beispielsweise kann ein Signal für einen speziellen Drohnentyp erzeugt werden, um eine Drohne dieses speziellen Drohnentyps zu übernehmen.

Das Verfahren kann ein Anzeigen eines Alarms basierend auf einem Ergebnis der Verifikation der Übernahme der bisherigen Steuerung der Drohne oder des Trennens der bisherigen Steuerung der Drohne umfassen. Die Position der Drohne kann kontinuierlich bestimmt werden. Das Verfahren kann ein Verifizieren der Übernahme der bisherigen Steuerung der Drohne mittels des Senders oder ein Verifizieren des Trennens der bisherigen Steuerung der Drohne mittels des Senders basierend auf ein oder mehreren Bildern der ein oder mehreren Kameras umfassen.

Das erfindungsgemäße System und das erfindungsgemäße Verfahren können durch weitere, jeweils für sich vorteilhafte, Ausgestaltungen weiter verbessert werden. Technische Merkmale der einzelnen Ausgestaltungen können dabei beliebig miteinander kombiniert und/oder weggelassen werden, sofern es nicht auf den mit dem weggelassenen technischen Merkmal erzielten technischen Effekt ankommt.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt.

Es zeigen:
Figur 1 eine schematische Darstellung eines erfindungsgemäßen Systems zur Drohnenabwehr nach einer Ausführungsform,
Figur 2 ein Flussdiagramm eines Verfahrens zur Drohnenabwehr nach einer Ausführungsform, und
Figur 3 ein Flussdiagramm eines Verfahrens zur Drohnenübernahme nach einer Ausführungsform.

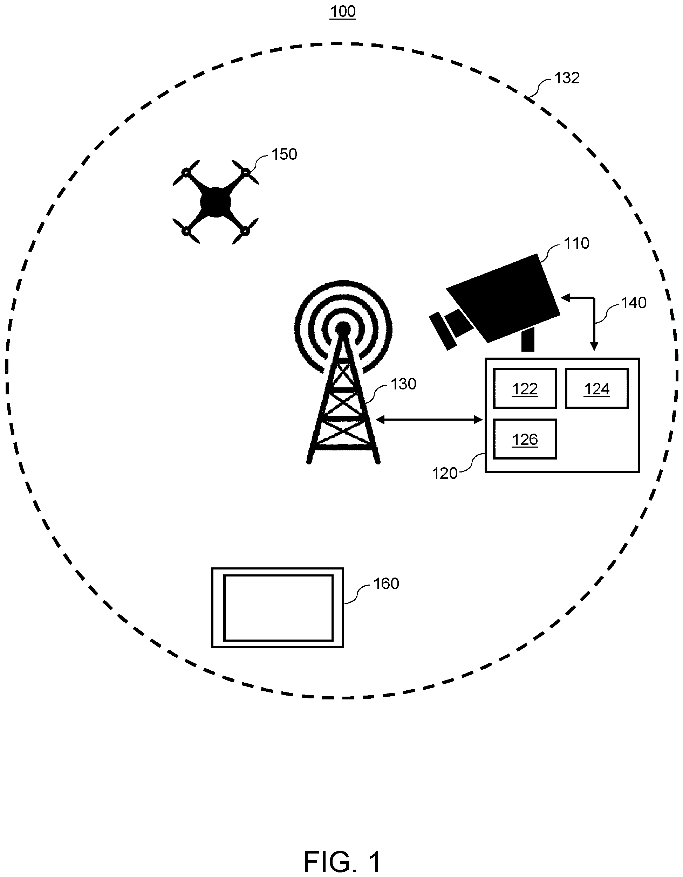

Figur 1 zeigt ein System 100 zur Drohnenabwehr. Das System 100 umfasst mindestens einen Sensor 130 der konfiguriert ist, eine Drohne 150 zu detektieren. Die Drohne 150 kann detektiert werden, sobald die Drohne 150 in einen Bereich 132 fliegt und Daten sendet oder empfängt. Beispielsweise kann der Sensor 130 eine Antenne umfassen, mit der Signale von oder zu der Drohne detektiert werden. Der Bereich 132, in dem eine Drohne 150 detektiert werden kann, kann durch eine Reichweite des mindestens einen Sensors 130 definiert sein.

Das System 100 umfasst des Weiteren einen oder mehrere Prozessoren 124 und ein oder mehrere computerlesbare Speichermedien 126. Die ein oder mehreren computerlesbaren Speichermedien 126 speichern computerausführbare Anweisungen, die, wenn sie von dem einen oder den mehreren Prozessoren 124 ausgeführt werden, bewirken, dass ein Verfahren ausgeführt wird. Die ein oder mehreren Prozessoren 124, und die ein oder mehreren computerlesbaren Speichermedien 126 können in einer Vorrichtung 120, beispielsweise einem Computer, enthalten sein. Die Vorrichtung 120 kann tragbar sein. Des Weiteren umfasst das System 100 einen Sender 122, der konfiguriert ist, um ein Signal zu einer Drohne 150 zu senden. Der Sender kann in der Vorrichtung 120 enthalten sein.

Das System 100 umfasst mindestens eine Kamera 110. Die mindestens eine Kamera ist ausgestaltet, Bilder aufzunehmen. Zum Beispiel kann die mindestens eine Kamera eine Videokamera umfassen. Die mindestens eine Kamera kann eine Pan, Tilt und Zoom, PTZ, - Kamera sein. Die mindestens eine Kamera kann auf eine bestimmte Position ausgerichtet werden. Dies kann mittels eines Schwenken-bei-Erkennung (slew-to-cue)-Verfahrens und/oder mittels künstlicher Intelligenz (KI) erfolgen. Zusätzlich kann mittels KI die Drohne basierend auf den Bildern der ein oder mehreren Kameras detektiert und klassifiziert werden, wodurch ein bildbasiertes und/oder videobasiertes tracking der Drohne stattfinden kann. Verliert die KI das Objekt während des trackings, kann das slew-to-cue-Verfahren die Aufgabe wiederaufnehmen.

In einer Ausführungsform sind die Vorrichtung 120, der mindestens eine Sensor 130 und die eine oder mehreren Kameras 110 in einem mobilen oder tragbaren System zusammengefasst. Die Vorrichtung 120, der mindestens eine Sensor 130 und die eine oder mehreren Kameras 110 sind miteinander verbunden. Zum Beispiel kann die Vorrichtung 120 über die Verbindung 140 Daten von der mindestens einen Kamera 110 oder Daten von dem mindestens einen Sensor 130 empfangen.

Das Verfahren, dass durch die ein oder mehreren Prozessoren 124 ausgeführt wird, umfasst ein Bestimmen einer Position einer mittels des mindestens einen Sensors 130 detektierten Drohne 150. Des Weiteren umfasst das Verfahren ein Ausrichten der ein oder der mehreren Kameras 110 auf die bestimmte Position der Drohne 150. Die mindestens eine ausgerichtete Kamera 110 kann ausgestaltet sein, ein oder mehrere Bilder von der bestimmten Position der Drohne aufzunehmen. Das Verfahren kann ein Auswerten der Bilder der ein oder mehreren Kameras 110 umfassen, um eine Nutzlast der Drohne 150 zu bestimmen, einen Typ der Drohne 150 zu bestimmen, oder die Position der Drohne 150 zu verifizieren. Des Weiteren umfasst das Verfahren mindestens eines der Folgenden basierend auf der Auswertung der Bilder der ein oder mehreren Kameras 110: ein Signalisieren eines Alarms an mindestens einen Nutzer, und ein Übernehmen oder ein Trennen einer bisherigen Steuerung der Drohne 150 mittels des Senders 122. Der Alarm kann Informationen über die Auswertung der Bilder der ein oder mehreren Kameras enhalten.

Der mindestens eine Sensor 130 kann einen Empfänger umfassen, der ausgestaltet ist, um Daten, die zwischen der Drohne und einer zur Drohne zugehörigen Fernbedienung übermittelt werden, zu detektieren. Die Drohne 150 kann basierend auf den zwischen der Drohne und der zur Drohne zugehörigen Fernbedienung übermittelten Daten detektiert werden. Außerdem oder alternativ kann ein Typ der Drohne basierend auf den zwischen der Drohne und der zur Drohne zugehörigen Fernbedienung übermittelten Daten bestimmt werden. Eine Position der zur Drohne zugehörigen Fernbedienung oder ein Startpunkt der Drohne kann basierend auf den Daten, die zwischen der Drohne und der zur Drohne zugehörigen Fernbedienung übermittelt werden, bestimmt werden. Alternativ kann die Position der zur Drohne zugehörigen Fernbedienung oder ein Startpunkt der Drohne aus der Drohne ausgelesen werden.

In einer Ausführungsform kann die Position der Drohne 150 mittels aus der Drohne 150 extrahierter Daten bestimmt werden. Alternativ kann das System 100 ein Ortungssystem umfassen, und die Position der Drohne mittels des Ortungssystems bestimmt werden.

Das Verfahren kann des Weiteren ein Senden mindestens eines Signals mittels des Senders 122 an eine Kommunikationsschnittstelle der Drohne 150 umfassen. Das Signal kann bewirken, dass mindestens eine der folgenden Aktionen ausgeführt wird: eine bisherige zur Drohne zugehörige Fernbedienung kommunikativ getrennt wird, Drohnendaten, wie beispielsweise Telemetrie-Daten oder eine Drohnenkennung, ausgelesen oder mittels eines Empfängers des Systems zur Drohnenabwehr empfangen werden, und die Steuerung der Drohne übernommen wird. Die Drohnendaten können ein GPS-Signal der Drohne umfassen und die Position der Drohne kann basierend auf dem GPS-Signal bestimmt werden. Zusätzlich kann eine Position einer zur Drohne 150 zugehörigen Fernbedienung oder ein Startpunkt der Drohne basierend auf den Drohnendaten bestimmt werden. Nach einem Empfang von Drohnendaten können eine oder mehrere Drohnenkennungen extrahiert und klassifiziert werden. Beispielsweise kann die Drohne 150 basierend auf den Drohnendaten als autorisiert oder nicht autorisiert klassifiziert werden. Das System zur Drohnenabwehr kann ein Telemetrie-Signal der Drohne 150 dekodieren, und die Drohnenposition mit GPS-Genauigkeit darstellen. Dekodierte Drohnendaten können mindestens eines der Startposition der Drohne, der Position der Fernbedienung, der Position der Drohne, und den Kurs der Drohne beinhalten.

Das System 100 kann eine Einsatzdrohne umfassen. Die Einsatzdrohne kann ausgestaltet sein, die Position der Drohne, eine Position einer zu der Drohne zugehörigen Fernbedienung oder einen Startpunkt der Drohne als Zielort automatisch anzusteuern. Die Einsatzdrohne kann mindestens eine Kamera umfassen, um am Zielort dokumentierende Bilder aufzunehmen. Die Einsatzdrohne kann ausgestaltet sein, um die Drohne, ein Fahrzeug oder eine Person basierend auf von der Einsatzdrohne aufgenommenen Bildern zu verfolgen.

Das System 100 kann einen Sicherheitscontainer 160 umfassen. Nach einer erfolgreichen Übernahme der Drohne 150 kann diese in dem Sicherheitscontainer gelandet werden. Der Sicherheitscontainer kann mindestens eine durchsichtige Scheibe umfassen, um eine Gefahr durch die Drohne abschätzen zu können.

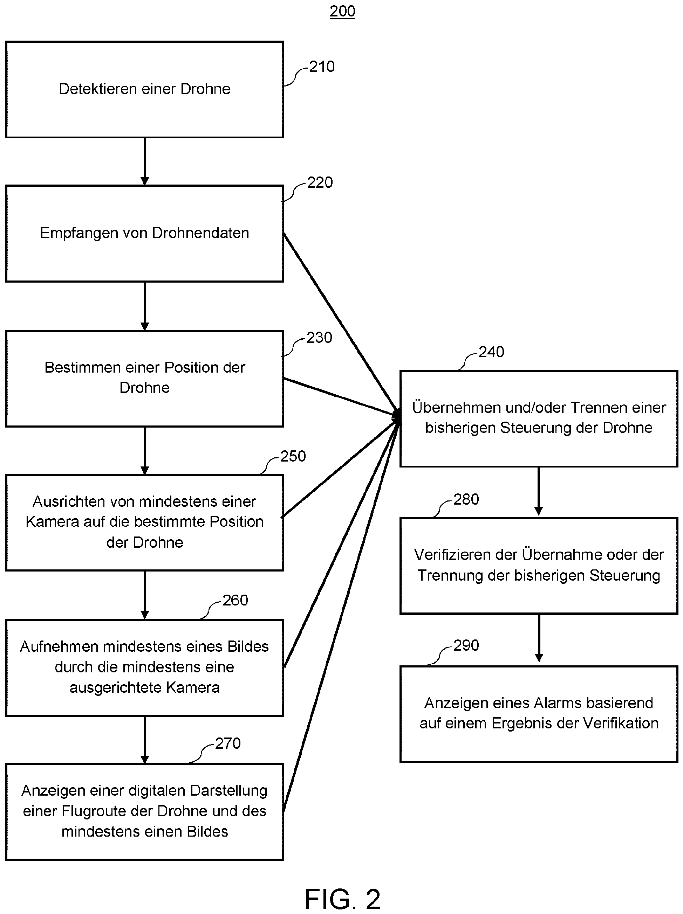

Figur 2 zeigt ein Flussdiagramm eines Verfahrens 200 zur Drohnenabwehr. Das Verfahren 200 kann durch ein System zur Drohnenabwehr, wie in Figur 1 dargestellt und durch die zugehörigen Ausführungsformen beschrieben, ausgeführt werden.

Das Verfahren 200 kann in einem ersten Schritt 210 ein Detektieren einer Drohne umfassen. Beispielsweise kann eine Funkabtastung eines Frequenzspektrums durchgeführt werden, um die Anwesenheit einer Drohne zu detektieren. Hierbei werden Signale zwischen der Drohne und einer zur Drohne zugehörigen Fernbedienung oder Signale von der Drohne detektiert. Dadurch kann die Drohne auch ohne direkten Sichtkontakt detektiert werden. Alternativ kann die Drohne auch durch einen Radar oder mittels Kameraüberwachung detektiert werden.

In Schritt 220 werden Drohnendaten empfangen. Die Drohnendaten können zwischen einer Drohne und einer zur Drohne zugehörigen Fernbedienung übermittelt werden oder von der Drohne ausgesendet oder ausgelesen werden. Die Drohnendaten können durch einen Empfänger, wie beispielsweise einer Antenne, des Systems zur Drohnenabwehr empfangen werden.

In Schritt 230 wird die Position der Drohne bestimmt. Die Position der Drohne kann mittels ein oder mehrerer weiterer Sensoren bestimmt werden. Zum Beispiel kann die Position der Drohne mit Hilfe eines Ortungssystems, wie einem Radar, bestimmt werden. Alternativ kann die Steuerung der Drohne auch durch das System zur Drohnenabwehr übernommen werden und die Daten über der Position der Drohne von der Drohne ausgelesen oder abgefragt werden.

In Schritt 240 wird die bisherige Steuerung übernommen. Alternativ kann auch nur die bisherige Steuerung der Drohne getrennt werden. Die Drohne kann alle Kommunikationen zwischen der Drohne und der Fernbedienung unter Verwendung eines für den Drohnentyp speziellen Protokolls codieren oder decodieren. Die Fernbedienung kann einen Fernbedienungs-Prozessor umfassen, der Drohnensteuerbefehle erzeugt und Drohnentelemetrie unter Verwendung des Drohnen-Herstellerprotokolls codiert und decodiert. Die herstellerspezifischen Drohnen-Protokolle können von einer internen oder externen Quelle erhalten werden. Das Drohnen-Protokoll ist die Sprache, mit der die Fernbedienung und die Drohne kommunizieren und durch die die Fernbedienung die Drohne steuert. Die Fernbedienung bestimmt einen definierten Radiowellen-Bandkanal zur Telemetrie und zur Steuerung der Drohne über eine Antenne der Fernbedienung. Die Fernbedienung kann Befehlsnachrichten an die Drohne übertragen.

Die Drohne kann Befehle von seiner Fernbedienung nur über den eingestellten Befehlskanal oder Radiowellen-Bandkanal empfangen. Die Drohne kann Telemetrieinformationen als Reaktion auf die Befehlsnachrichten der Fernbedienung übertragen.

Bei der Übernahme der Drohne durch das System zur Drohnenabwehr kann das System zur Drohnenabwehr die Datenübertragungen der Drohne erkennen. Das System zur Drohnenabwehr kann eine Drohnenprotokolldatenbank umfassen, in welcher herstellerspezifische Drohnen-Protokolle gespeichert sind. Das System zur Drohnenabwehr kann das Protokoll identifizieren, welches die Drohne zur Übertragung und zum Empfangen von Nachrichten, Befehlen und Informationen verwendet. Das Protokoll kann beispielsweise durch eine Analyse der zwischen der Drohne und der zur Drohne zugehörigen Fernbedienung übermittelten Daten bestimmt werden. Mit Hilfe des identifizierten Protokolls kann das System zur Drohnenabwehr eine oder mehrere Drohnen-Abfragen durchführen. Das System zur Drohnenabwehr kann Geräteidentifikationsinformationen der Drohne empfangen.

In einer Ausführungsform kann das System zur Drohnenabwehr eine oder mehrere Befehlsnachrichten an die Drohne senden. Die eine oder mehreren Befehlsnachrichten können eine Befehlsnachricht zur Verbindung der Drohne mit dem System zur Drohnenabwehr oder einer Fernbedienung des Systems zur Drohnenabwehr umfassen. Die Befehlsnachricht zur Verbindung der Drohne mit dem System zur Drohnenabwehr oder einer Fernbedienung des Systems zur Drohnenabwehr kann durch ein Protokoll ausgelöst werden, wobei das Protokoll ausgeführt wird, wenn eine Kommunikation zwischen der Drohne und einer Fernbedienung der Drohne abbricht oder verloren geht. Das System zur Drohnenabwehr kann direkt auf den Kommunikationskanal auf welchem aktuell mit einer bisherigen Fernbedienung kommuniziert wird springen. Mit der Befehlsnachricht das die Kommunikation verloren ging und dem anschließenden Befehl, der neuen Verbindung mit dem System zur Drohnenabwehr oder einer Fernbedienung des Systems zur Drohnenabwehr, kann die Steuerung der Drohne übernommen werden. Die bisherige Fernsteuerung hat keine Kontrolle mehr über die Drohne und kann keine Daten und kein Videobild von der Drohne mehr empfangen.

Alternativ kann das System zur Drohnenabwehr eine Befehlsnachricht zur Änderung eines Steuerkanals der Drohne an die Drohne senden. Nachdem die Drohne diese Befehlsnachricht empfängt, ändert die Drohne ihren Steuerkanal. Dadurch wird die bisherige Steuerung durch die zur Drohne zugehörige Fernbedienung getrennt. Die Verbindung der Drohne zur bisherigen Fernbedienung wird dadurch getrennt. Dadurch verliert die Fernbedienung die Kontrolle über die Drohne.

Das System zur Drohnenabwehr kann mit der Drohne unter Verwendung des geänderten Steuerkanals kommunizieren. Zum Beispiel kann das System zur Drohnenabwehr Steuerungsbefehle an die Drohne schicken und die Steuerung der Drohne übernehmen.

In Schritt 250 werden ein oder mehrere Kameras, beispielsweise ein oder mehrere Pan, Tilt und Zoom, PTZ, -Kameras, auf die in Schritt 230 bestimmte Position der Drohne ausgerichtet. Die ein oder mehreren Kameras können mittels künstlicher Intelligenz auf die bestimmte Position der Drohne ausgerichtet werden.

In Schritt 260 nehmen die eine ausgerichtete oder die mehreren ausgerichteten Kameras ein oder mehrere Bilder auf.

In Schritt 270, werden die ein oder mehreren Bilder in Kombination mit einer digitalen Darstellung einer Flugroute angezeigt. Die digitale Darstellung der Flugroute umfasst eine digitale Darstellung der in Schritt 230 bestimmten Position der Drohne. Das System zur Drohnenabwehr kann einen Bildschirm umfassen, auf dem einem Nutzer des Systems zur Drohnenabwehr die digitale Darstellung der Flugroute der Drohne und die ein oder mehreren Bilder angezeigt werden. Zum Beispiel können die ein oder mehreren Bilder Teil eines Live-Videostreams sein, der in Kombination mit der digitalen Darstellung der Flugroute angezeigt wird. Die Position der Drohne kann kontinuierlich bestimmt werden, sodass die digitale Darstellung der Position der Drohne in oder nahezu in Echtzeit angezeigt wird.

Die kombinierte Darstellung aus der Flugroute mit Bildern der Kameras erlaubt es, schnell und effektiv eine Gefahr, die von der Drohne ausgeht, abzuschätzen, um geeignete Gegenmaßnahmen zu ergreifen. Außerdem kann die Drohne entlang einer geeigneten und sicheren Route gesteuert werden, nachdem die Steuerung der Drohne übernommen wurde. Die Route könnte basierend auf einer aus der kombinierten Darstellung abgeschätzten Gefahr bestimmt werden.

In Schritt 280 kann die Übernahme der bisherigen Steuerung der Drohne oder das Trennen der bisherigen Steuerung der Drohne basierend auf den aufgenommenen ein oder mehreren Bildern der ein oder mehreren Kameras verifiziert werden. Signale oder Befehle für die Drohne können mittels eines Senders des Systems zur Drohnenabwehr zur Drohne gesendet werden.

Basierend auf einem Ergebnis der Verifikation der Übernahme der bisherigen Steuerung der Drohne oder des Trennens der bisherigen Steuerung der Drohne kann ein Alarm angezeigt werden, wie in Schritt 290 gezeigt. Der Alarm kann einen akustischen und/oder visuellen Alarm umfassen. Der Alarm kann einem Nutzer des Systems zur Drohnenabwehr angezeigt werden.

In einem optionalen Schritt kann die Drohne mittels eines Lasers, eines Wasserwerfers, einer Schusswaffe, einer Kamikazedrohne, eines Fangnetzes, eines Klebers, starkem Schall oder einer Leine flugunfähig gemacht werden.

Schritt 240 kann während oder nach einem der Schritte 220, 230, 250, 260 und 270 erfolgen, wie in Figur 2 durch die Pfeile gezeigt.

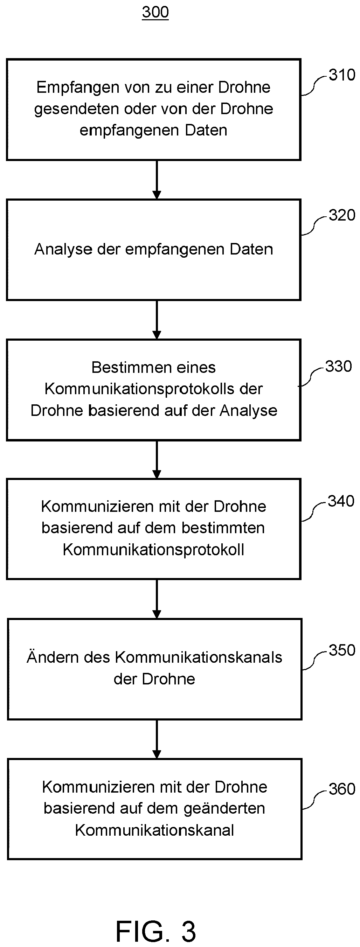

Figur 3 zeigt ein Flussdiagramm eines Verfahrens 300 zur Drohnenübernahme nach einer Ausführungsform. Eine Drohne kann Daten auf einem Fernsteuerungskanal senden und empfangen. Ein oder mehrere Schritte des Verfahrens 300 können dem Schritt 240 aus Figur 2 entsprechen oder mit diesem kombinierbar sein.

In Schritt 310 empfängt ein Sensor zu einer Drohne gesendete oder von der Drohne empfangene Daten. Der Sensor kann Teil ein oder mehrerer Sensoren sein. Der Sensor kann zu einem Drohnenübernahmesystem oder einem System zur Drohnenabwehr gehören. Schritt 310 kann dem Schritt 220 aus Figur 2 entsprechen. Das System zur Drohnenabwehr kann Radiofrequenz-Signale von entweder der Drohne, der Fernbedienung oder möglicherweise einem aktiven Untersystem der Drohne, das vom Sensor erkannt wird, empfangen.

In Schritt 320 werden die von dem Sensor empfangenen Daten analysiert. Wenn die Daten von einer Drohne oder einer Fernbedienung stammen, kann das System durch eine FrequenzAnalyse ein Kommunikationsprotokoll der Drohne bestimmen. Das System zur Drohnenabwehr kann eine Drohnenprotokolldatenbank umfassen, in welcher herstellerspezifische Drohnen-Protokolle gespeichert sind.

Sobald das System zur Drohnenabwehr Funksignale detektiert, kann es die Funksignale demodulieren, um eine geordnete Bitsequenz zu erhalten. Die Bitfolge kann verschlüsselt sein. In einigen Beispielen kann Hardware, die darauf spezialisiert ist, diese bestimmte Verschlüsselung zu entschlüsseln, verwendet werden, um die Bitsequenz zu entschlüsseln. In anderen Fällen kann Hardware verwendet werden, die Softwarealgorithmen unterstützt, um die digitale Signalzufuhr der Bitsequenz dynamisch zu entschlüsseln. Nachdem dieser Vorgang des Organisierens und Entschlüsselns (falls erforderlich) abgeschlossen ist, sind die Daten von der Drohne im Klartext sichtbar.

Das System zur Drohnenabwehr kann die Analyse fortsetzen, um festzustellen, ob eine Übereinstimmung zwischen dem Frequenz-Muster und/oder den Daten, die sie beobachtet, und Frequenz-Mustern und/oder Daten vorliegt, von denen bekannt ist, dass sie von Protokollen gegebener Hersteller abgeleitet sind. Dies kann beispielsweise durch einen Abgleich von einem detektierten Frequenzmuster oder den detektierten Daten mit Frequenzmustern oder Daten, die zu bekannten Protokollen aus der der Protokolldatenbank gehören, erfolgen.

In Schritt 330 wird ein Kommunikationsprotokoll basierend auf der Analyse der empfangenen Daten bestimmt.

In Schritt 340 kann das System zur Drohnenabwehr mit der Drohne basierend auf dem bestimmten Kommunikationsprotokoll kommunizieren. Zum Beispiel kann das System zur Drohnenabwehr mindestens einen Befehl an die Drohne unter Berücksichtigung des Kommunikationsprotokolls schicken. Das System zur Drohnenabwehr kann Informationen über die Drohne selbst (und möglicherweise die Fernbedienung) abfragen, um es als Bedrohung oder als keine Bedrohung einzustufen. Wenn das System mit dem bestimmten Protokoll Nachrichten und Befehle an die Drohne codiert, werden die Nachrichten und Befehle genauso verarbeitet, wie Nachrichten und Befehle von der zur Drohne zugehörigen Fernbedienung.

In Reaktion auf einen Befehl durch das System zur Drohnenabwehr ändert die Drohne einen Kommunikationskanal der Drohne in Schritt 350. Der Kommunikationskanal einer Drohne kann geändert werden, um Interferenzprobleme auf dem aktuellen Kanal zu reduzieren. Dies kann ein Fernbedienungs-Befehl in Fällen von Kanalinterferenzen sein. Durch die Änderung des Kommunikationskanals wird der Kontakt der bisherigen Fernbedienung zu der Drohne getrennt.

In Schritt 360 kann das System zur Drohnenabwehr mit Drohne basierend auf dem geänderten Kommunikationskanal kommunizieren. Dadurch übernimmt das System zur Drohnenabwehr die Steuerung der Drohne von der Fernbedienung, sodass sich die Fernbedienung nicht erneut mit der Drohne verbinden kann und nur das System die Drohne steuern kann. Die Fernbedienung hat einen offenen Kommunikationskanal zur Drohne bis zu dem Punkt, an dem das System der Drohne befiehlt, seinen Befehls- und Steuerkanal zu ändern, und die Fernbedienung somit keine Steuerungsgewalt mehr über die Drohne hat.

Nach der Übernahme der Drohne kann die Drohne an einem sicheren Ort gelandet werden. Die Route der Drohne kann basierend auf einer Gefahr durch die Drohne ausgewählt werden. Anschließend kann die Drohne deaktiviert werden. Das System kann die Drohne zu einem anderen Ort steuern, indem es Steuerbefehle unter Verwendung des geänderten Steuerkanals sendet.

## Patentansprüche

1. System (100) zur Drohnenabwehr, umfassend:
mindestens einen Sensor (130), der konfiguriert ist, eine Drohne (150) zu detektieren;
einen Sender (122), der konfiguriert ist, um ein Signal zu einer Drohne (150) zu schicken;
eine oder mehrere Kameras (110);
einen oder mehrere Prozessoren (124); und
ein oder mehrere computerlesbare Speichermedien (126), auf denen computerausführbare Anweisungen gespeichert sind, die, wenn sie von dem einen oder den mehreren Prozessoren (124) ausgeführt werden, bewirken, dass
eine Position einer mittels des mindestens einen Sensors (130) detektierten Drohne (150) bestimmt wird;
die eine oder die mehreren Kameras (110) auf die bestimmte Position der Drohne (150) ausgerichtet werden;
Bilder der ein oder mehreren Kameras (110) ausgewertet werden um mindestens eines der folgenden:
- eine Nutzlast der Drohne (150) zu bestimmen,
- einen Typ der Drohne (150) zu bestimmen, und
- die Position der Drohne (150) zu verifizieren; und
basierend auf der Auswertung der Bilder der ein oder mehreren Kameras (110) mindestens eines der folgenden:
ein Alarm an mindestens einen Nutzer signalisiert wird,
die bisherige Steuerung der Drohne (150) mittels des Senders (122) übernommen wird, und
die bisherige Steuerung der Drohne (150) mittels des Senders (122) getrennt wird.

2. System nach Anspruch 1, wobei der Alarm Informationen über die Auswertung der Bilder der ein oder mehreren Kameras enthält.

3. System nach einem der Ansprüche 1 und 2, wobei der mindestens eine Sensor einen Empfänger umfasst, der ausgestaltet ist, um Daten, die zwischen der Drohne und einer zur Drohne zugehörigen Fernbedienung übermittelt werden, zu detektieren, und
wobei die Drohne basierend auf den zwischen der Drohne und der zur Drohne zugehörigen Fernbedienung übermittelten Daten detektiert wird, und/oder
wobei ein Typ der Drohne basierend auf den zwischen der Drohne und der zur Drohne zugehörigen Fernbedienung übermittelten Daten bestimmt wird.

4. System nach Anspruch 3, wobei eine Position der zur Drohne zugehörigen Fernbedienung oder ein Startpunkt der Drohne basierend auf den Daten, die zwischen der Drohne und der zur Drohne zugehörigen Fernbedienung übermittelt werden, bestimmt wird, oder
eine Position der zur Drohne zugehörigen Fernbedienung oder ein Startpunkt der Drohne basierend auf aus der Drohne extrahierten Daten bestimmt wird.

5. System nach einem der Ansprüche 1 bis 4, wobei die Position der Drohne mittels aus der Drohne extrahierter Daten bestimmt wird; oder
wobei das System zur Abwehr der Drohne ein Ortungssystem umfasst, und die Position der Drohne mittels des Ortungssystems bestimmt wird.

6. System nach einem der Ansprüche 1 bis 5, wobei
die ein oder mehrere Kameras mittels künstlicher Intelligenz auf die bestimmte Position der Drohne ausgerichtet werden; und/oder
die ein oder mehrere Kameras ein oder mehrere Pan, Tilt und Zoom, PTZ, -Kameras umfassen.

7. System nach Anspruch 1, wobei die computerausführbaren Anweisungen, wenn sie von dem einen oder den mehreren Prozessoren (124) ausgeführt werden, bewirken, dass mittels des Senders mindestens ein Signal an eine Kommunikationsschnittstelle der Drohne gesendet wird, wobei das Signal bewirkt, dass mindestens eines der folgenden: eine bisherige zur Drohne zugehörige Fernbedienung getrennt wird, Daten der Drohne ausgelesen werden, und die Steuerung der Drohne übernommen wird.

8. System nach Anspruch 7, wobei die aus der Drohne ausgelesenen Daten ein GPS-Signal der Drohne umfassen und die Position der Drohne basierend auf dem GPS-Signal bestimmt wird, und/oder
mindestens eines der folgenden basierend auf den aus der Drohne ausgelesenen Daten bestimmt wird: einer Startposition der Drohne, einer Position einer zur Drohne zugehörigen Fernbedienung, der Position der Drohne, und eines Kurses der Drohne.

9. System nach Anspruch 1 umfassend eine Einsatzdrohne, wobei die Einsatzdrohne ausgestaltet ist, die Position der Drohne, eine Position einer zu der Drohne zugehörigen Fernbedienung oder einen Startpunkt der Drohne als Zielort automatisch anzusteuern, wobei die Einsatzdrohne mindestens eine Kamera umfasst, um am Zielort dokumentierende Bilder aufzunehmen.

10. System nach Anspruch 9, wobei die Einsatzdrohne ausgestaltet ist, um die Drohne, ein Fahrzeug oder eine Person basierend auf von der Einsatzdrohne aufgenommenen Bildern zu verfolgen,
wobei Bilder von der Einsatzdrohne mittels Gesichtserkennung ausgewertet werden.

11. System nach einem der Ansprüche 1 bis 10, wobei das System einen Sicherheitscontainer (160) umfasst und ausgestaltet ist, die Drohne nach Übernahme der Steuerung in dem Sicherheitscontainer zu landen.

12. Verfahren zur Drohnenabwehr, umfassend:
Bestimmen einer Position einer Drohne;
Übernehmen einer bisherigen Steuerung der Drohne oder Trennen der bisherigen Steuerung der Drohne;
Ausrichten ein oder mehrerer Kameras auf die bestimmte Position der Drohne;
Aufnehmen ein oder mehrerer Bilder mit den ausgerichteten ein oder mehreren Kameras; und
Anzeigen einer digitalen Darstellung einer Flugroute der Drohne, umfassend eine digitale Darstellung der bestimmten Position der Drohne, in Kombination mit ein oder mehreren Bildern der ein oder mehreren Kameras.

13. Verfahren nach Anspruch 12 des Weiteren umfassend:
Empfangen von Drohnendaten durch einen Empfänger eines Systems zur Drohnenabwehr, wobei die Drohnendaten zwischen der Drohne und einer zur Drohne zugehörigen Fernbedienung übermittelte Daten sind oder aus einem Speicher der Drohne ausgelesen werden;
Identifizieren eines Typs der Drohne oder einer Steuerung der Drohne basierend auf Drohnendaten,
wobei das Übernehmen der bisherigen Steuerung der Drohne oder das Trennen der bisherigen Steuerung der Drohne das Senden eines Signals mittels eines Senders an eine Kommunikationsschnittstelle der Drohne umfasst, wobei das Signal von dem identifizierten Typ der Drohne oder der identifizierten Steuerung der Drohne abhängt.

14. Verfahren nach einem der Ansprüche 12 und 13 des Weiteren umfassend:
Verifizieren der Übernahme der bisherigen Steuerung der Drohne oder des Trennens der bisherigen Steuerung der Drohne basierend auf den ein oder mehreren Bildern der ausgerichteten ein oder mehreren Kameras, und/oder
wobei die Position der Drohne kontinuierlich bestimmt wird.

15. Verfahren nach Anspruch 14 des Weiteren umfassend:
Anzeigen eines Alarms basierend auf einem Ergebnis der Verifikation der Übernahme der bisherigen Steuerung der Drohne oder des Trennens der bisherigen Steuerung der Drohne.
